(19) Europäisches Patentamt
European Patent Office
Office européen des brevets

(11) EP 2 358 773 B1

(12) EUROPEAN PATENT SPECIFICATION

(45) Date of publication and mention of the grant of the patent:
**01.04.2020 Bulletin 2020/14**

(21) Application number: **09771310.1**

(22) Date of filing: **10.12.2009**

(51) Int Cl.:
***C08F 279/02*** (2006.01) ***C08F 279/04*** (2006.01)
***C08L 51/04*** (2006.01) ***C08L 55/02*** (2006.01)
***C08F 2/00*** (2006.01)

(86) International application number:
**PCT/EP2009/008861**

(87) International publication number:
**WO 2010/069515 (24.06.2010 Gazette 2010/25)**

# (54) RUBBER-REINFORCED VINYL AROMATIC (CO)POLYMER, HAVING AN OPTIMUM BALANCE OF PHYSICO-MECHANICAL PROPERTIES AND A HIGH GLOSS

KAUTSCHUKVERSTÄRKTES VINYLAROMATISCHES (CO)POLYMER MIT OPTIMALER BALANCE ZWISCHEN PHYSIKALISCH-MECHANISCHEN EIGENSCHAFTEN UND HOCHGLANZ

(CO)POLYMÈRE AROMATIQUE VINYLIQUE RENFORCÉ PAR DU CAOUTCHOUC, PRÉSENTANT UN ÉQUILIBRE OPTIMAL EN TERMES DE PROPRIÉTÉS PHYSICO-MÉCANIQUES ET UN ÉCLAT BRILLANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.12.2008 IT MI20082224**

(43) Date of publication of application:
**24.08.2011 Bulletin 2011/34**

(73) Proprietor: **versalis S.p.A.**
**20097 San Donato Milanese (MI) (IT)**

(72) Inventors:
- **CASALINI, Alessandro**
  **I-46100 Mantova (IT)**
- **CHIEZZI, Leonardo**
  **I-46010 Curtatone (IT)**
- **ROSSI, Anna Grazia**
  **I-46100 Mantova (IT)**
- **SODDU, Luca**
  **I-40024 Castel S. Pietro Terme (IT)**

(74) Representative: **Bottero, Carlo et al**
**Barzanò & Zanardo Milano S.p.A.**
**Via Borgonuovo, 10**
**20121 Milano (IT)**

(56) References cited:
**EP-A2- 0 277 687** **EP-A2- 0 277 687**
**WO-A1-03/011928** **WO-A1-2005/005539**
**WO-A1-2005/100425** **WO-A1-2006/063719**
**WO-A2-2004/072172** **GB-A- 1 027 326**
**GB-A- 1 199 672** **JP-A- 5 194 676**
**JP-A- 5 247 149** **JP-A- 5 255 458**
**JP-A- 6 166 729** **US-A- 3 309 422**
**US-A- 3 487 127** **US-A- 4 524 180**
**US-A- 4 639 494** **US-B2- 6 706 814**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 358 773 B1

## Description

The present invention relates to a rubber-reinforced vinyl aromatic (co)polymer having an optimum balance of physico-mechanical proprieties and a high gloss.

More specifically, the present invention relates to a vinyl aromatic (co)polymer reinforced with a diene rubber, having optimum physico-mechanical characteristics, such as impact resistance, tensile modulus, yield strength, ultimate tensile stress, combined with a high gloss.

In the present description and claims the terms rubber and elastomer should be considered synonyms. All the information contained herein should be considered preferred, even when not expressly specified.

Vinyl aromatic (co)polymers reinforced with rubber, in particular diene rubber, polybutadiene, for example, represent a well-known group of engineering polymers known on the market and widely described in literature. Specific examples of these (co)polymers are, for example, styrene/acrylonitrile co-polymers containing polybutadiene particles, dispersed in the polymeric matrix, generally known as ABS resins, and high impact polystyrene, generally known as HIPS, comprising a continuous phase of polystyrene in which rubber particles are dispersed, for example polybutadiene particles.

It is known that the surface gloss of vinyl aromatic (co)polymers, reinforced with rubber particles, can be improved by reducing the rubber particle dimension to values lower than 1 $\mu$m**.** This condition can be obtained by increasing the shear during the polymerization reaction. Shear simply means the friction force imposed by the stirring of the mixture. The greater this force, the smaller the rubber particle diameter will be. As the shear is in relation to the revolution number of the stirrer of the polymerization reactor, this characteristic is an instrument on which it is possible to intervene within certain limits established by the motor power.

Another parameter which can be used for regulating the dimension of the rubber particles dispersed in the matrix is to reduce the viscosity in solution of the diene rubber used in the production of vinyl aromatic (co)polymers. As a diene rubber, however, such as polybutadiene, for example, in order to be handled and packed, must have a sufficient viscosity to avoid the "cold flow" phenomenon, it has so far been considered practically impossible to produce a reinforced vinyl aromatic (co)polymer, with a high surface gloss, using linear low-viscosity polybutadiene homopolymer alone as rubber.

Examples are known in literature in which the production of ABS is described, having improved aesthetical properties (gloss), wherein diene rubbers are used, such as polybutadiene, for example, which have been modified to reduce the viscosity in solution and which are suitable for producing ABS co-polymers with enhanced aesthetical properties. For example;

* US patent 4,421,895 describes the use of a diene rubber having a solution viscosity at 5% by weight of styrene at 25°C equal to or lower than 80 mPa*s, in the production of ABS. In particular, the diene rubber proposed in this patent is a linear styrene-butadiene block co-polymer. Using this type of rubber, rubber particles dispersed in the matrix are obtained, having dimensions smaller than 0.7 $\mu$m, and an ABS with high aesthetical properties (gloss) is consequently obtained. The improvement in the surface gloss obtained using styrene-butadiene linear block polymers, however, is achieved to the detriment of other physico-mechanical characteristics, in particular, the impact resistance. In order to improve this latter property maintaining the surface gloss substantially unchanged, US patent 4,524,180 describes the production of ABS with the use of a mixture of diene rubber (polybutadiene) and a styrene-butadiene linear block co-polymer having a low viscosity, when measured in solution at 5% by weight in styrene at 25°C;

- US 4,587,294 and 4,639,494 and European patent 277,687 describe the use of star-shaped or radial rubbers, with a low viscosity, when measured in solution at 5% by weight in styrene at 25°C, for producing ABS with an enhanced surface gloss. Radial or star-shaped rubbers are produced by means of well-known synthesis techniques, using lithium-alcohols as initiators of the anionic polymerization of butadiene, first producing the linear polymer with active chain-ends, carrying a negative charge and $Li^+$ as counter-ion and subsequently adding a coupling agent, such as silicon tetrachloride, for example, capable of reacting with said chain-ends and binding various polymer chains to the silicon atom. Radial or star-shaped rubbers allow co-polymers to be obtained with an enhanced gloss, with respect to other known diene-based rubbers, having the same physico-mechanical characteristics, but they have the drawback of requiring a more complex process for their production.

The Applicant has now surprisingly found that it is possible to produce vinyl aromatic (co)polymers having an enhanced gloss, with the same the physico-mechanical characteristics, using a diene rubber as reinforcing elastomer. By using linear diene rubbers having a viscosity (measured in solution at 5% by weight in styrene) equal to (or even higher than) that of block polybutadiene-polystyrene co-polymers or radial rubbers, i.e. diene rubbers structured as described hereunder, dispersed rubber particles are in fact obtained with smaller dimensions and therefore final polymers with enhanced aesthetical properties, having the same mechanical properties.

An object of the present invention therefore relates to a rubber-reinforced vinyl aromatic (co)polymer comprising

a polymeric matrix and a rubber phase consisting of a diene rubber dispersed and/or grafted to the polymeric matrix wherein said rubber phase is selected from at least one of the following:

(i) a linear diene rubber with a solution viscosity lower than 70 cPs, preferably between 40 and 60 cPs;
(iii) a three-chain diene rubber, having a solution viscosity lower than 70 cPs, preferably between 40 and 60 cPs, i.e. a linear diene rubber coupled with a trifunctional agent (a non-limiting example is methyl trichlorosilane with a Si:Li ratio of 1:3);
(iv) a mixture of linear diene rubbers (i) and radial diene rubbers (v) in a maximum ratio between them (i)/(v) ranging from 99.5/0.5 to 85/15;

wherein the diene rubber in the rubber phase (i), (iii) and (iv) is a polybutadiene having:

a solution viscosity comprised between 40 and 70 cPs, as measured according to the description in a solution thereof at 5% by weight in styrene at 25°C;
a content of 1,2 vinyl comprised between 5 and 35% by weight; and
a content of 1,4-cis comprised between 20 and 85% by weight.

The radial diene rubbers (v) can be commercial radial polybutadiene rubbers.
The diene rubber (i), (iii) or (iv) used in the vinyl aromatic (co)polymer object of the present invention, can be either natural or synthetic.
Particularly preferred is polybutadiene having:

- a solution viscosity between 40 and 60 cPs, measured in a solution thereof at 5% by weight in styrene at 25°C;
- a 1,2 vinyl content ranging from 7 to 14% by weight;
- a 1,4-cis content between 25 and 45% by weight; and

This type of polybutadiene is obtained by anionic polymerization of butadiene in a solution of aliphatic or cyclo-aliphatic solvents or a mixture thereof, with the use of lithium-alkyl initiators. The polymerization can be carried out in batch reactors or continuous reactors; in batch reactors, the initiator, normally consisting of primary or secondary butyl lithium, is added to the reaction mixture consisting of the solvent and monomer charged in such a quantity that the amount of total solids at the end of the polymerization is not higher than 20% by weight; it is known to experts in the field that said reaction can be carried out in the presence of Lewis bases in a higher or lower quantity depending on the content of vinyl or 1,2 units which are to be present in the polymeric chain. Ethers are among the most widely-used Lewis bases, tetrahydrofurane in particular, which already in a quantity of 100 ppm with respect to the solvent is capable of considerably accelerating the reaction, maintaining the content of vinyl unit at levels < 12%; with higher quantities of THF, the microstructure is progressively modified up to vinyl unit contents higher than 40% for quantities of THF equal to 5,000 ppm. High vinyl unit quantities, however, are not necessary if not harmful for the use of polybutadiene in the field of plastic material modification; it is preferable for the content of these units not to exceed the value of 15% even if, for a higher grafting efficiency, it is possible to use polybutadiene with a higher content of 1,2 units. It is also known to experts in the art that reactions carried out in the absence of ethers or tertiary amines are sufficiently rapid to guarantee the complete polymerization of the monomer in times not longer than 1 hour, with final temperatures not higher than 120°C and, in any case, controlled by the initial temperature of the reaction mixture which cannot be lower than 35-40°C to avoid an insufficiently rapid starting reaction and incompatible with normal production cycles. The reactor can be equipped with cooling jackets, however these are not particularly efficient as a result of the unfavourable surface/volume ratio typical of industrial reactors whose volume is never smaller than 20 $m^3$; a more efficient temperature control is obtained by means of a partial evaporation of the solvent which is condensed and subsequently fed to the reaction reactor; this type of reactor, called "boiling reactor" is quite efficient for the control of the reaction temperature and, in the state of the art, represents the best way for effectively limiting the natural increase in temperature due to the heat of the butadiene polymerization. Carrying out the polymerization in batch reactors causes the formation of a polymer which, before a possible addition of a coupling agent, has a monomodal molecular weight distribution, wherein the ratio between the weight average molecular weight (Mw) and the number average molecular weight (Mn) is very close to 1 and normally between 1 and 1.2. Carrying out the polymerization in a continuous reactor, of the CSTR type, or in various reactors in continuous of the CSTR type arranged in series, on the contrary, causes the formation of a polymer with a monomodal molecular weight distribution in which the Mw/Mn ratio is between 1.8 and 2.5, the polymer, in both cases, at the end of the polymerization is linear and has chain-ends which are still active. These chain-ends consists of the species polybutadiene-lithium. The possible addition of a protogene agent (an alcohol, for example) or a silicon halo-derivative wherein the ratio between the halogen and silicon is equal to 1 (a non-limiting example is trimethyl chlorosilane TMCS) causes the termination of the butadiene-lithium chain-end and maintains the linear macrostructure of the molecule.

The addition of a polyfunctional substance capable of reacting with the active chain ends, on the other hand, causes the formation of a branched macrostructure characterized in that it has a node from which a number of branches depart having the same functionality as the polyfunctional substance used. As a non-limiting example, the use of silicon tetrachloride is known to experts in the field, which, when added to the reaction environment in a Si:Li ratio = 1:4, causes the formation of a radial polymer which, if the polymer has been prepared in a batch reactor, has the four branches with the same lengths, whereas in the case of a polymer prepared in continuous, the four branches are different. If, on the other hand, the Si:Li ratio is lower than 1:4, partially radial structures (ii) are obtained. If a trifunctional silicon compound is used as coupling agent (a non-limiting example is methyl trichloro-silane), tri-chain rubbers are obtained (iii). The normal production process of polybutadiene subsequently comprises, after the addition of a pair of antioxidants consisting of a primary antioxidant of the phenolic type and a secondary antioxidant, typically an organic compound of trivalent phosphorous, the elimination of the solvent which is effected by means of the combined action of water and vapour in stirred containers. This produces a suspension of rubber granules in water from which, after draining on nets, the rubber is sent to a drying section consisting of two mechanical extruders. In the first extruder (expeller) a squeezing operation is carried out, which eliminates most of the water which is drained through side slits of the extruder whereas the complete drying is effected in a second extruder (expander) in which the rubber subjected to mechanical action is heated to a temperature of 160-180°C. Part of the vapour is eliminated from an aperture (vent) situated at the end of the extruder, whereas a part is eliminated at the outlet from the head. The rubber granules are then sent with belts or other conveying means to a packager where they are baled. The nature of polybutadiene (unsaturated rubber) requires a strict control of the finishing conditions, as experts in the field are aware of complications deriving from the formation of lumps of insoluble substances (gels) which are normally formed in the finishing area, in particular in the expander. These gels cause a deterioration in the quality of the rubber destined for use in the field of the modification of plastic materials by the formation of substantial surface defects. A great deal of attention must therefore be paid in defining the finishing conditions of polybutadiene with the consequent necessity of effecting numerous analyses for process and product control.

The polymeric matrix of the rubber-reinforced (co)polymers of the present invention can be either a (co)polymer deriving from one or more vinyl aromatic monomers or a (co)polymer deriving from one or more vinyl aromatic monomers and one or more comonomers, for example acrylic comonomers. The term vinyl aromatic monomer, as used in the present description and claims, comprises ethylenically unsaturated compounds having the general formula

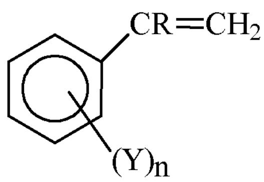

(I)

wherein R represents hydrogen or an alkyl radical having from 1 to 4 carbon atoms, n is zero or an integer ranging from 1 to 5 and Y represents a halogen or an alkyl radical having from 1 to 4 carbon atoms. Examples of vinyl aromatic monomers having the above general formula are: styrene, $\alpha$-methyl styrene, methyl styrene, ethyl styrene, butyl styrene, dimethyl styrene, mono-, di-, tri-, tetra- and penta-chlorostyrene, bromo-styrene, methoxy-styrene, acetoxy-styrene, etc.. Preferred vinyl aromatic monomers are styrene and/or $\alpha$-methyl styrene.

The vinyl aromatic monomers having general formula (I) can be used alone or in a mixture of up to 50% by weight with other co-polymerizable monomers. Examples of these monomers are (meth)acrylic acid, $C_1$-$C_4$ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid, such as acrylamide, methacrylamide, acrylonitrile, methacrylonitrile, butadiene, ethylene, divinyl benzene, maleic anhydride, etc.. Preferred co-polymerizable monomers are acrylic monomers such as acrylonitrile and methyl methacrylate. The quantities of vinyl aromatic monomer and acrylic monomer used for the production of the copolymer vary in relation to the desired physico-mechanical properties in the vinyl aromatic copolymer reinforced with final rubber. The quantity of acrylic monomer generally ranges from 5 to 45% by weight, preferably from 15 to 35% by weight and, correspondingly, the quantity of vinyl aromatic monomer ranges from 95 to 55% by weight, preferably from 85 to 65% by weight, based on the total weight of the vinyl aromatic monomer-acrylic monomer copolymer. The quantity of diene rubber (i), (ii), (iii) or (iv) in the rubber-reinforced (co)polymer generally ranges from 4 to 30% by weight, preferably from 6 to 25% by weight, with respect to the weight of the (co)polymer.

The rubber-reinforced (co)polymer object of the present invention can be prepared by means of any conventional technique used for producing crosslinked high impact co-polymers, such as mass polymerization, polymerization in solution, emulsion and mass-suspension. The specimens obtained from the (co)polymer object of the present invention have a gloss at 60° higher than 85.

Some illustrative examples are provided for a better understanding of the present invention and for its embodiment, which should in no way be considered as being of a limitative nature.

CHARACTERIZATION OF THE SYNTHESIZED POLYMERS

## 1.Determination of the viscosity in styrene solution

The method includes the preparation of a solution of polybutadiene in styrene at 5% by weight and the subsequent measurement of the viscosity at 25°C using a Cannon Fenske capillary tube whose dimension must be selected so as to avoid that the elution time through the capillary is neither too short nor too long. In the case of the polymers examined, the Model 300, valid within the range of 50-250 cP, is used.

## 2.Determination of the average molecular weight of the SAN matrix.

The determination of the average molecular weight of the SAN matrix was effected on chromatographic equipment consisting of: a degasser system, pump, injector: WATERS Alliance 2695, set of Phenogel columns (300x7.6 mm) of 5 microns, porosity 106, 105, 104, 103 Angstrom, a Waters 410 differential refractive index detector, UV Waters 2487 detector, chromatographic analysis software: Millenium 32 version 3.2 (Waters).

## 3. Determination of the morphology of the rubber phase dispersed in ABS

The dimensions and morphology of the rubber phase dispersed in the SAN matrix were determined via T.E.M. (Transmission Electronic Microscopy), F. Lenz, A. Wiss - Mikroscopie 63, 1956, page 56. The morphology of the rubber particles was determined by visual inspection of the micrographies and the characterization of the various structures was effected in accordance with the classification described in "Teilchenbildung bei der Herstellung von Kautschukmodifiziertem Polystyrol" of Adolf Echte 58/89 (1977), page 175-198, and in EP 716.664. For the calculation of the statistical parameter average volumetric Diameter of the particles DV the following formula was applied:

$$D_v = \frac{\sum_i N_i D_i^4}{\sum_i N_i D_i^3}$$

wherein $D_i$ represents the diameter of the i-th particle whereas for the calculation of the percentage of particles of the "core shell" type or with a "mixed" structure (labyrinth or brain) the stereological method was used, described in C. Maestrini et al. Journal of Material Science, Vol. 27, 1992, page 5994. The T.E.M. analysis was carried out on a transmission electron microscope Philips CM120.

## 4.Other characterizations

* The concentration of the residual styrene monomer and acrylonitrile and other volatile organic substances was determined via gas-chromatography;
* The concentration of polybutadiene in the ABS was determined by iodometric titration in accordance with the method of Wijs, Berichte, 1898, Vol. 31, page 750;
* The gel phase content (after thermal crosslinking of the rubber) and the swelling index (without thermal crosslinking of the rubber) were determined by means of the Ruffing test described in American patent US 4,214,056;
* The Melt Flow Index (MFI) was measured in accordance with the standard method ASTM D 1238 at 200°C under a weight of 5 kg;
* The notched Izod value (on injection moulded specimens) was determined in accordance with the standard method ISO 180/1A - ISO 179 (values expressed as $kJ/m^2$). Another parameter relating to the impact resistance of the materials is represented by the Ball Drop, determined in accordance with the standard method ISO 6603/2 on two different thicknesses specimens (2 mm and 3 mm).
* The tensile strength (yield strength, yield elongation, stress at break, elongation at break, tensile modulus) and the flexural strength properties (maximum stress, elastic modulus) were measured on injection moulded specimens in accordance with the standard methods ISO 527, ISO 178 and expressed as MPa, with the exception of the yield

elongation and elongation at break which are expressed as percentages.

* The material gloss was determined in accordance with the standard method ASTM D 523 at two reading angles (20 and 60°C) using a Dr. Lange glossmeter. The measurement was effected on three steps specimens obtained by injection moulding with measurements of the reading area equal to: 95 mm x 75 mm x 3 mm. The moulding conditions of the test samples were the following: temperature of the melt 220°C and temperature of the mould 35°C.

**Example 1**

3.6 kg of linear polybutadiene (i), having a solution viscosity at 5% in styrene (SM) = 44 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 2 (comparative)**

3.6 kg of partially radial polybutadiene (ii) (with a content of branched end groups of 10% by weight), having a solution viscosity at 5% in styrene (SM) = 45 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 3**

3.6 kg of three-arm polybutadiene (iii), having a solution viscosity at 5% in styrene (SM) = 42 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), in a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 4**

3.4 kg of linear polybutadiene (i), having a solution viscosity at 5% in styrene (SM) = 44 CPs, 0.2 kg of radial polybutadiene, having a solution viscosity at 5% in styrene (SM) = 209 CPs, forming a mixture (iv), having a solution viscosity at 5% in styrene (SM) = 59 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), in a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 5**

3.2 kg of linear polybutadiene (i), having a solution viscosity at 5% in styrene (SM) = 44 CPs, 0.4 kg of radial polybutadiene, having a solution viscosity at 5% in styrene (SM) = 209 CPs, forming a mixture (iv), having a solution viscosity at 5% in styrene (SM) = 65 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), in a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Reference example 6**

3.6 kg of polybutadiene SOL B 183 (modified polybutadiene containing 10% by weight of styrene, produced by Polimeri Europa) (solution viscosity at 5% in styrene (SM) = 30 CPs), 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 7 (comparative)**

3.6 kg of polybutadiene INTENE P30 (four-arm star polybutadiene, produced by Polimeri Europa) (solution viscosity at 5% in styrene (SM) = 45 CPs), 20 g of antioxidant ANOX PP 18 in 21.8 kg of styrene monomer and 7.6 kg

of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 8 (comparative)**

3.6 kg of partially radial polybutadiene (II) (with a content of branched end groups of 25% by weight), having a solution viscosity at 5% in styrene (SM) = 65 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 9 (comparative)**

2.7 kg of linear polybutadiene (i), having a solution viscosity at 5% in styrene (SM) = 44 CPs, 0.9 kg of radial polybutadiene, having a solution viscosity at 5% in styrene (SM) = 209 CPs, forming a mixture (IV), having a solution viscosity at 5% in styrene (SM) = 85 CPs, 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), in a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

**Example 10 (comparative)**

3.6 kg of polybutadiene INTENE 40 (linear polybutadiene, produced by Polimeri Europa) (solution viscosity at 5% in styrene (SM) = 95 CPs), 20 g of antioxidant ANOX PP 18 in 21.8 kg of styrene monomer and 7.6 kg of ethylbenzene, are dissolved in a 60-litre batch-type autoclave, equipped with a temperature regulator and stirring system, stirring for 5 hours at 85°C. 12.4 g of initiator 1,1-di(terbutylperoxy)cyclohexane (Tx22E50) are then added.

The solution thus obtained is fed, after mixing under heat (at a temperature of 60°C) with a feed of acrylonitrile (weight ratio solution/acrylonitrile 82.5/17.5), into a first PFR reactor equipped with a stirrer and temperature regulation system, with a thermal profile of the reactor increasing from 112°C to 120°C, where the pre-polymerization is effected with grafting and phase inversion.

48 g of the transfer agent n-dodecylmercaptan (NDM) are added to the mixture leaving the first reactor which is then transferred to a second PFR reactor also equipped with a stirrer and temperature regulation system, with a thermal profile of the reactor increasing from 150°C to 165°C.

The mixture obtained is fed to a devolatilizer operating under vacuum at a temperature of 235°C in order to crosslink the rubber and remove the unreacted monomers and solvent from the polymer. The molten polymer thus obtained is granulated so as to obtain the end-product whose characteristics are indicated in Table 1.

TABLE 1

| | ***Example 1*** | ***Example 2 (comparative)*** | ***Example 3*** | ***Example 4*** | ***Example 5*** |
|---|---|---|---|---|---|
| **PBDE characteristics** | | | | | |
| Rubber type | (i) | (ii) | (iii) | (iv) | (iv) |
| Rubber viscosity [cPs] | 44 | 45 | 42 | 59 | 65 |
| **ABS characteristics** | | | | | |
| Rubber in the final polymer [%] | 11.9 | 12.1 | 11.8 | 11.9 | 12.1 |
| Bound acrylonitrile [%] | 19.0 | 19.1 | 19.2 | 19.1 | 19.1 |
| GPC ABS (Dalton) | 130,000 | 129,500 | 130,100 | 129,700 | 130,400 |
| Mw/Mn | 2.67 | 2.71 | 2.69 | 2.74 | 2.70 |
| Swelling index | 10.5 | 10.4 | 10.9 | 11.0 | 11.0 |
| Crosslinked Gel [%] | 21.9 | 22.1 | 22.0 | 22.1 | 22.5 |
| Particle Num. Diam. *D[4,3]* [µm] | 0.51 | 0.54 | 0.54 | 0.55 | 0.60 |
| Gloss 20° | 70 | 60 | 60 | 60 | 59 |
| Gloss 60° | 95 | 92 | 91 | 91 | 89 |
| Melt Index [200°C-5 Kg] | 15.1 | 15.5 | 14.8 | 14.1 | 14.2 |
| Vicat ISO 306 [5 Kg-50°C/h] | 103.0 | 103.2 | 102.9 | 103.1 | 103.1 |
| Izod ISO 23°C [KJ/m²] | 15.8 | 15.5 | 15.9 | 16.2 | 16.0 |
| Charpy 23 °C [KJ/m²] | 15.5 | 15.1 | 15.7 | 15.5 | 15.3 |
| **Tensile ISO 527** | | | | | |
| Stress at break [MPa] | 46.9 | 47.5 | 47.0 | 46.8 | 46.5 |
| Tensile Stress [MPa] | 34.2 | 33.0 | 33.5 | 33.4 | 33.8 |
| Elongation at break [%] | 15.5 | 16.4 | 16.0 | 15.9 | 16.2 |
| Tensile Modulus [MPa] | 2360 | 2370 | 2310 | 2320 | 2290 |
| **Flexural properties ISO 178** | | | | | |
| Maximum stress [MPa] | 74.6 | 74.4 | 74.1 | 73.9 | 72.9 |
| Tensile modulus [MPa] | 2340 | 2250 | 2280 | 2210 | 2270 |
| **Falling Weight** | | | | | |
| 2 mm test samples Total energy [J] | 18.6 | 19.1 | 20.1 | 19.8 | 20.2 |
| 3mm test samples Total energy [J] | 34.9 | 35.6 | 35.5 | 34.2 | 35.4 |

| | Example 6 (Reference) | Example 7 (Comparative) | Example 8 (Comparative) | Example 9 (Comparative) | Example 10 (Comparative) |
|---|---|---|---|---|---|
| | **PBDE characteristics** | | | | |
| Rubber type | SOL B 183 | INTENE P30 | (II) | (IV) | INTENE 40 |
| Rubber viscosity [cPs] | 30 | 45 | 65 | 85 | 95 |
| | **ABS characteristics** | | | | |
| Rubber in the final polymer [%] | 12.6 | 12.5 | 12.1 | 12.7 | 11.8 |
| Bound acrylonitrile [%] | 19.2 | 19.0 | 19.3 | 19.2 | 19.1 |
| GPC ABS (Dalton) | 130600 | 129700 | 130800 | 130000 | 129800 |
| Mw/Mn | 2.78 | 2.81 | 2.68 | 2.65 | 2.71 |
| Swelling index | 10.9 | 10.5 | 11.1 | 10.8 | 10.4 |
| Crosslinked Gel [%] | 22.4 | 26.0 | 24.1 | 25.1 | 32.2 |
| Particle Num. Diam. *D[4,3]* [µm] | 0.6 | 0.95 | 0.84 | 0.90 | 1.8 |
| Gloss 20° | 59 | 30 | 41 | 37 | 25 |
| Gloss 60° | 89 | 68 | 80 | 75 | 51 |
| Melt Index [200°C-5 Kg] | 13.4 | 12.1 | 12.8 | 12.3 | 11.8 |
| Vicat ISO 306 [5 Kg-50°C/h] | 102.7 | 102.4 | 102.9 | 102.1 | 102.9 |
| Izod ISO 23°C [KJ/m$^2$] | 16.1 | 18.0 | 17.0 | 16.4 | 12.1 |
| Charpy 23 °C [KJ/m$^2$] | 15.3 | 17.4 | 16.8 | 16.0 | 11.8 |
| | **Tensile ISO 527** | | | | |
| Stress at break [MPa] | 46.2 | 45.0 | 44.2 | 45.1 | 44.2 |
| Tensile Stress [MPa] | 33.9 | 32.2 | 31.8 | 32.0 | 31.0 |
| Elongation at break [%] | 16.1 | 33.0 | 34.1 | 32.5 | 32.1 |
| Tensile Modulus [MPa] | 2250 | 2180 | 2100 | 2100 | 2120 |
| | **Flexural properties ISO 178** | | | | |
| Maximum stress [MPa] | 72.5 | 71.2 | 70.5 | 73.0 | 71.1 |
| Tensile modulus [MPa] | 2190 | 2120 | 2100 | 2090 | 2110 |
| | **Falling Weight** | | | | |
| 2 mm test samples Total energy [J] | 20 | 32 | 30 | 31 | 31 |
| 3mm test samples Total energy [J] | 35.1 | 67 | 64 | 69 | 65 |

## Claims

1. Rubber-reinforced vinyl aromatic (co)polymer comprising a polymeric matrix and a rubber phase of a diene rubber dispersed and/or grafted in the polymeric matrix wherein said rubber phase is selected between at least one of:

(i) a linear diene rubber;
(iii) a three-branches diene rubber, that is a linear diene rubber coupled with a trifunctional agent;
(iv) a mixture of linear diene rubbers (i) and radial diene rubbers (v) with a maximum ratio between one another (i)/(v) comprised between 99.5/0.5 and 85/15,

wherein the diene rubber in the rubber phase (i), (iii) and (iv) is a polybutadiene having:

a solution viscosity comprised between 40 and 70 cPs, as measured according to the description in a solution thereof at 5% by weight in styrene at 25°C;
a content of 1,2 vinyl comprised between 5 and 35% by weight; and
a content of 1,4-cis comprised between 20 and 85% by weight.

**2.** Vinyl aromatic (co)polymer according to claim 1, wherein the diene rubber in the rubber phase (i), (iii) and (iv) is polybutadiene having:

a solution viscosity comprised between 40 and 60 cPs, as measured according to the description in a solution thereof at 5% by weight in styrene at 25°C;
a content of 1,2 vinyl comprised between 7 and 14% by weight;
a content of 1,4-cis comprised between 25 and 45% by weight.

**3.** Vinyl aromatic copolymer according to anyone of the previous claims, comprising a quantity of acrylic comonomer ranging from 5 to 45% by weight.

**4.** Vinyl aromatic (co)polymer according to any of the previous claims, wherein the amount of diene rubber (i), (iii) or (iv) is comprised from 4 to 30% by weight.

**5.** Process for the preparation of the rubber-reinforced vinyl aromatic (co)polymer according to anyone of claims from 1 to 4, comprising polymerizing by means of bulk polymerization, solution, emulsion and bulk suspension at least one vinyl aromatic monomer in the presence of at least one rubber chosen from (i), (iii) and (iv).

**6.** Use of the rubber-reinforced vinyl aromatic (co)polymer according to anyone of claims from 1 to 4, for preparing bodies formed with a gloss at 60° higher than 85, as measured according to the description.

## Patentansprüche

**1.** Gummiverstärktes vinylaromatisches (Co)polymer, umfassend eine polymere Matrix und eine Gummiphase aus einem Dien-Gummi, dispergiert und/oder gepfropft in der polymeren Matrix, wobei die Gummiphase ausgewählt ist aus mindestens einem von:

(i) einem linearen Dien-Gummi;
(iii) einem dreifach verzweigten Dien-Gummi, der ein linearer Dien-Gummi ist, gekoppelt mit einem trifunktionalen Mittel;
(iv) einer Mischung aus linearen Dien-Gummis (i) und radialen Dien-Gummis (v), mit einem Maximalverhältnis untereinander (i)/(v) zwischen 99,5/0,5 und 85/15,

wobei der Dien-Gummi in der Gummiphase (i), (iii) und (iv) ein Polybutadien ist mit:

einer Lösungsviskosität im Bereich zwischen 40 und 70 cPs, wie gemessen gemäß der Beschreibung in einer Lösung davon bei 5 Gew.-% in Styren bei 25°C;
einem Gehalt von 1,2-Vinyl im Bereich zwischen 5 und 35 Gew.-%; und
einem Gehalt von 1,4-cis im Bereich zwischen 20 und 85 Gew.-%.

**2.** Vinylaromatisches (Co)polymer nach Anspruch 1, wobei der Dien-Gummi in der Gummiphase (i), (iii) und (iv) Polybutadien ist mit:

einer Lösungsviskosität im Bereich zwischen 40 und 60 cPs, wie gemessen gemäß der Beschreibung in einer Lösung davon bei 5 Gew.-% in Styren bei 25°C;

einem Gehalt von 1,2-Vinyl im Bereich zwischen 7 und 14 Gew.-%;
einem Gehalt von 1,4-cis im Bereich zwischen 25 und 45 Gew.-%.

**3.** Vinylaromatisches (Co)polymer nach irgendeinem der vorhergehenden Ansprüche, umfassend eine Menge an Acrylcomonomer im Bereich von 5 bis 45 Gew.-%.

**4.** Vinylaromatisches (Co)polymer nach irgendeinem der vorhergehenden Ansprüche, wobei die Menge an Dien-Gummi (i), (iii) oder (iv) im Bereich von 4 bis 30 Gew.-% ist.

**5.** Verfahren zur Herstellung eines gummiverstärkten vinylaromatischen (Co)polymers nach irgendeinem der Ansprüche 1 bis 4, umfassend die Polymerisierung mittels Massepolymerisierung, Lösung, Emulsion und Massesuspension mindestens eines vinylaromatischen Monomers in der Gegenwart mindestens eines Gummis, ausgewählt aus (i), (iii) und (iv).

**6.** Verwendung des gummiverstärkten vinylaromatischen (Co)polymers nach irgendeinem der Ansprüche 1 bis 4 zur Herstellung von Körpern, gebildet mit einem Glanzwert von 60° größer als 85, wie gemessen gemäß der Beschreibung.

## Revendications

**1.** (Co)polymère vinylaromatique renforcé avec du caoutchouc, comprenant une matrice polymère et une phase caoutchouteuse d'un caoutchouc diène dispersé et/ou greffé dans la matrice polymère, dans lequel ladite phase caoutchouteuse est choisie parmi au moins un de :

(i) un caoutchouc diène linéaire ;
(iii) un caoutchouc diène à trois ramification, à savoir un caoutchouc diène linéaire couplé à un agent trifonctionnel ;
(iv) un mélange de caoutchoucs diène linéaires (i) et de caoutchoucs diène radiaux (v) ayant entre eux un rapport (i)/(v) maximum compris entre 99,5/0,5 et 85/15,

dans lequel le caoutchouc diène dans la phase caoutchouteuse (i), (iii) et (iv) est un polybutadiène ayant :

une viscosité en solution comprise entre 40 et 70 cP, telle que mesurée conformément à la description dans une solution de celui-ci à 5 % en poids dans du styrène à 25 °C ;
une teneur en 1,2-vinyle comprise entre 5 et 35 % en poids ; et
une teneur en 1,4-cis comprise entre 20 et 85 % en poids.

**2.** (Co)polymère vinylaromatique selon la revendication 1, dans lequel le caoutchouc diène dans la phase caoutchouteuse (i), (iii) et (iv) est un polybutadiène ayant :

une viscosité en solution comprise entre 40 et 60 cP, telle que mesurée conformément à la description dans une solution de celui-ci à 5 % en poids dans du styrène à 25 °C ;
une teneur en 1,2-vinyle comprise entre 7 et 14 % en poids ;
une teneur en 1,4-cis comprise entre 25 et 45 % en poids.

**3.** Copolymère vinylaromatique selon l'une quelconque des revendications précédentes, comprenant une quantité de comonomère acrylique se situant dans la plage de 5 à 45 % en poids.

**4.** (Co)polymère vinylaromatique selon l'une quelconque des revendications précédentes, dans lequel la quantité de caoutchouc diène (i), (iii) ou (iv) est comprise entre 4 et 30 % en poids.

**5.** Procédé pour la préparation du (co)polymère vinylaromatique renforcé avec du caoutchouc selon l'une quelconque des revendications 1 à 4, comprenant le fait de polymériser par polymérisation en masse, en solution, en émulsion et suspension de masse au moins un monomère vinylaromatique en la présence d'au moins un caoutchouc choisi parmi (i), (iii) et (iv).

**6.** Utilisation du (co)polymère vinylaromatique renforcé avec du caoutchouc selon l'une quelconque des revendications

1 à 4, pour la préparation de corps formés avec un brillant sous 60° supérieur à 85, tel que mesuré conformément à la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4421895 A
- US 4524180 A
- US 4587294 A
- US 4639494 A
- EP 277687 A
- EP 716664 A
- US 4214056 A


### Non-patent literature cited in the description


- **ADOLF ECHTE.** *Teilchenbildung bei der Herstellung von Kautschukmodifiziertem Polystyrol,* 1977, vol. 58/89, 175-198
- **C. MAESTRINI et al.** *Journal of Material Science,* 1992, vol. 27, 5994
- **WIJS.** *Berichte,* vol. 31, 750